# EUROPÄISCHE PATENTSCHRIFT

(11) **EP 3 082 004 B1**
(45) Veröffentlichungstag und Bekanntmachung des Hinweises auf die Patenterteilung: **23.11.2022**
(21) Anmeldenummer: 15192358.8
(22) Anmeldetag: 30.10.2015
(51) Int. Cl.: G05B 23/02

(54) **WARTUNG EINER GEBRAUCHTEN GASTURBINE**
MAINTENANCE OF A USED GAS TURBINE
ENTRETIEN D'UNE TURBINE A GAZ USAGEE

(30) Priorität: 17.03.2015 DE 102015204797
(43) Veröffentlichungstag der Anmeldung: 19.10.2016
(73) Patentinhaber: MTU Aero Engines AG, 80995 München (DE)
(72) Erfinder: Städing, Jörn, 30161 Hannover (DE); Marx, Jonas, 30173 Hannover (DE); Friedrichs, Jens, 38179 Schwülper, Rothemühle (DE); Reitz, Gerald, 38106 Braunschweig (DE)

(56) Entgegenhaltungen:
- EP-B1- 1 422 380
- EP-B1- 2 655 005
- US-A1- 2002 128 790
- US-B1- 7 335 089
- US-B1- 8 209 839

## Beschreibung

Die vorliegende Erfindung betrifft ein Verfahren zur Wartung einer gebrauchten Gasturbine sowie ein System und ein Computerprogrammprodukt zur Durchführung des Verfahrens.

Aus der EP 2 655 005 B1 ist ein Verfahren zur Instandsetzung von Gasturbinenkomponenten bekannt, bei dem zum einen eine Kreisprozessanalyse eines gesamten Triebwerks mit einer neuwertigen Komponente, zum anderen eine Kreisprozessanalyse des gesamten Triebwerks mit der Komponente nach einer kompletten Reparatur und zum dritten eine Kreisprozessanalyse des gesamten Triebwerks mit der Komponente nach einer Teilreparatur durchgeführt wird.

US 8,209,839 B1 offenbart ein Verfahren zum Modellieren eines Teiles einer Gasturbine, wobei zum Modellieren Funktionsdaten eines im Einsatz befindlichen ähnlichen Teils verwendet werden, um das zu Modellierende widerstandsfähiger zu gestalten. Aus der US 7,335,089 B1 ist ein Verfahren zum Wideraufbauen von Turbinenschaufeln bekannt. Aus der EP 1 422 380 B1 ist ein Verfahren zur Analyse von Turbinenteilen (z.B. Schaufeln) auf Schäden hin bekannt, wobei aufbauend auf der Analyse ein Reparaturvorschlag abgegeben wird. Aus der US 2002/128790 A1 ist ein Verfahren bekannt bei dem ermittelt wird, ob ein Turbinenteil repariert werden kann oder ausgetauscht werden muss.

Eine Aufgabe einer Ausführung der vorliegenden Erfindung ist es, die Wartung gebrauchter Gasturbinen zu verbessern.

Diese Aufgabe wird durch ein Verfahren mit den Merkmalen des Anspruchs 1 gelöst. Ansprüche 9 und 10 stellen ein System bzw. ein Computerprogrammprodukt zur Durchführung eines hier beschriebenen Verfahrens unter Schutz. Vorteilhafte Ausführungsformen der Erfindung sind Gegenstand der Unteransprüche.

Die vorliegende Erfindung umfasst ein Verfahren zur Generierung einer Aufbauempfehlung für eine Baugruppe aus mehreren Bauteilen einer gebrauchten Gasturbine mit den automatisierten Schritten:
Ermitteln (S13) einer Geometrie eines strömungsführenden Bauteils, insbesondere einer Lauf- oder Leitschaufel, der Gasturbine;
Prognostizieren (S14) einer Aero- und/oder Thermodynamik des Bauteils auf Basis der ermittelten Geometrie;
Klassieren (S15) des Bauteils in eine von mehreren vorgegebenen Klassen, wobei diese Klassen Güteklassen sind, auf Basis der prognostizierten Aero- und/oder Thermodynamik die Brauchbarkeit des Bauteils bezeichnet; und Prognostizieren (S24) einer Eigenschaft einer Baugruppe mit dem Bauteil auf Basis seiner Klasse, wobei Eigenschaften der Baugruppe auf Basis von unterschiedlichen Anordnungen und/oder von unterschiedlichen Klassen des Bauteils der Baugruppe prognostiziert werden (S24) und wobei eine Aufbauempfehlung der Baugruppe auf Basis einer der prognostizierten Eigenschaften ausgegeben wird (S26), so, dass das eine erste Klasse aufweisende Bauteil nach einer Reparatur eine prognostizierte zweite Klasse aufweist, wenigstens eine Eigenschaft der Baugruppe mit einem Vergleichsbauteil einer anderen Klasse prognostiziert und hieraus bestimmt wird, ob das Bauteil ohne Reparatur, das reparierte Bauteil oder ein Ersatzbauteil an der entsprechenden Position eingebaut werden soll.

In einer Ausführung sind wenigstens zwei, insbesondere wenigstens drei, und/oder höchstens zehn, insbesondere höchstens sechs Klassen, insbesondere Güteklassen, vorgegeben, wobei in einer Ausführung unterschiedliche Klassen, insbesondere Güteklassen, unterschiedliche Eigenschaften, insbesondere Parameterbereiche, bezeichnen, insbesondere in einer Weiterbildung eine schlechteste Güteklasse ein, insbesondere aero- und/oder thermodynamisch, nicht brauchbares Bauteil bezeichnet, in einer anderen Weiterbildung eine schlechteste Güteklasse ein, insbesondere (auch) aero- und/oder thermodynamisch, noch brauchbares Bauteil mit schlechter Performance bezeichnet, wobei Bauteile, die nicht mehr brauchbar sind, aussortiert werden.

In einer Ausführung umfasst die Geometrie einen Parametersatz, der die Geometrie des Bauteils beschreibt und insbesondere aero- und/oder thermodynamisch und/oder strukturell relevante Parameter und/oder Montageparameter beinhaltet. Die Prognose der Aero- und/oder Thermodynamik erfolgt in einer Ausführung numerisch, wobei in einer Ausführung eine Mehrzahl von Kennlinien, beispielsweise Polaren von Schaufelprofilen, Austauschraten zwischen Variationen unabhängiger Geometrieparameter und aero- und/oder thermodynamischem Leistungsverhalten liefert.

Durch das Klassieren des Bauteils in eine von mehreren vorgegebenen Klassen, insbesondere Güteklassen, auf Basis der prognostizierten Aero- und/oder Thermodynamik kann vorteilhaft eine Empfehlung zur weiteren Handhabung dieses Bauteils generiert werden.

Insbesondere kann vorteilhaft eine Reparaturempfehlung für das Bauteil generiert werden. Insbesondere hierzu weist in einer Ausführung das Verfahren zusätzlich die teilweise oder vollständig automatisierten Schritte auf:
- virtuelles Variieren der Geometrie des Bauteils;
- Prognostizieren der Aero- und/oder Thermodynamik des variierten Bauteils auf Basis dieser variierten Geometrie; und
- Klassieren des variierten Bauteils in eine der vorgegebenen Klassen, insbesondere Güteklassen.

Durch das Klassieren des variierten Bauteils in eine der vorgegebenen Klassen, insbesondere Güteklassen, kann die Auswirkung einer Reparatur, die zu der variierten Geometrie führt, vorteilhaft bewertet, insbesondere wenigstens teilweise automatisiert weiterverarbeitet werden.

Hierzu wird in einer Ausführung vollständig oder teilweise automatisiert eine Reparaturempfehlung des Bauteils auf Basis der variierten Geometrie ausgegeben, falls die Klasse, insbesondere Güteklasse, des variierten Bauteils eine vorgegebene Bedingung erfüllt, insbesondere besser ist als die Klasse, insbesondere Güteklasse, des Bauteils mit der ermittelten Geometrie und/oder wenigstens eine vorgegebene Mindest- bzw. Soll-(Güte)Klasse ist.

Auf diese Weise kann einfach, effektiv und insbesondere wenigstens teilweise automatisiert eine Reparatur- bzw. Instandsetzungsempfehlung generiert bzw. ausgegeben werden, falls prognostiziert wird, dass die Reparatur zu einem Klassen-, insbesondere Güteklassensprung führt. Zusätzlich oder alternativ erlaubt der Vergleich mit einer vorgegebenen Mindest- bzw. Soll-(Güte)Klasse eine einfache, effektive und insbesondere wenigstens teilweise automatisierte Generierung bzw. Ausgabe einer Reparatur- bzw. Instandsetzungsempfehlung.

In einer Weiterbildung wird die Geometrie des Bauteils mehrfach in unterschiedlicher Weise virtuell variiert, insbesondere können unterschiedliche, insbesondere in Bezug auf eine Reparatur unabhängige, Geometriemerkmale - beispielsweise die Vorderkantengeometrie, Sehnenlänge, Schaufellänge, Schaufelhöhe oder dergleichen - jeweils einzeln und/oder in einer oder mehreren Kombinationen ein- oder mehrfach variiert bzw. mit unterschiedlichen Werten belegt werden. Dann wird jeweils die Aero- und/oder Thermodynamik des so variierten Bauteils auf Basis der so variierten Geometrie prognostiziert und das so variierte Bauteil in eine der vorgegebenen Klassen, insbesondere Güteklassen, klassiert. Anschließend kann eine (Teil)Reparatur- bzw. Instandsetzungsempfehlung auf Basis der Klassen, insbesondere Güteklassen, der unterschiedlich variierten Geometrien generiert bzw. ausgegeben werden, insbesondere abhängig von einem mit der jeweiligen Variation bzw. der diese erzeugenden Reparatur verbundenen Aufwand. Auf diese Weise kann effektiv diejenige Reparatur- bzw. Instandsetzungsempfehlung generiert bzw. ausgegeben werden, die mit gering(st)em Aufwand zu einer gewünschten Klasse, insbesondere Güteklasse, oder einem Klassen-, insbesondere Güteklassensprung führt.

Beispielsweise kann unabhängig eine Sehnenlänge und Schaufelhöhe variiert und hierfür jeweils eine Aero- und/oder Thermodynamik prognostiziert werden. Zum Beispiel kann eine Variation der Sehnenlänge zu einer Verbesserung der auf Basis der hierfür prognostizierten Aero- und/oder Thermodynamik klassierten Klasse, insbesondere Güteklasse, führen, während eine Variation der Schaufelhöhe zu derselben Klasse, insbesondere Güteklasse, führt. Dann kann als Reparaturempfehlung eine entsprechende Veränderung der Sehnenlänge ausgegeben werden, während eine Schaufelhöhe nicht verändert werden muss, so dass der Reparaturaufwand reduziert werden kann.

Zusätzlich oder alternativ zu einem Generieren bzw. Ausgeben einer Reparatur- bzw. Instandsetzungsempfehlung für ein einzelnes Bauteil kann in einer Ausführung auch eine Aufbauempfehlung für eine Baugruppe bzw. ein Modul mit mehreren Bauteilen generiert bzw. ausgegeben werden. Insbesondere hierzu weist in einer Ausführung das Verfahren den teilweise oder vollständig automatisierten Schritt auf: Prognostizieren einer Eigenschaft, insbesondere Güte, einer Baugruppe mit dem Bauteil auf Basis seiner Klasse, insbesondere Güteklasse,.

Das Prognostizieren einer Eigenschaft, insbesondere Güte, einer Baugruppe auf Basis der Klasse, insbesondere Güteklasse, des Bauteils erlaubt eine einfache, effektive und insbesondere wenigstens teilweise automatisierte Prognose, da die Eigenschaft, insbesondere Güte, nicht mehr auf Basis der konkreten, detaillierten Geometrie des jeweiligen Bauteils, sondern stattdessen mit einem Vergleichsbauteil der entsprechenden Klasse, insbesondere Güteklasse, prognostiziert werden kann, dessen Geometrie und/oder Aero- und/oder Thermodynamik in einer Ausführung aus den Geometrien bzw. Aero- und/oder Thermodynamiken mehrerer unterschiedlicher Bauteile dieser Klasse, insbesondere Güteklasse, er-, insbesondere gemittelt, insbesondere prognostiziert oder getestet, worden ist.

Dies erlaubt in einer Ausführung eine einfache, effektive und insbesondere wenigstens teilweise automatisierte, insbesondere kombinatorische, Optimierung der Baugruppe. Insbesondere hierzu werden in einer Ausführung teilweise oder vollständig automatisiert Eigenschaften, insbesondere Güten, der Baugruppe auf Basis von unterschiedlichen Anordnungen eines oder mehrerer Bauteile der Baugruppe, insbesondere auf Basis der Klasse, insbesondere Güteklasse, dieses bzw. dieser Bauteil(e), prognostiziert.

Wird beispielsweise ein (variiertes) Bauteil, beispielsweise eine Laufschaufel, in eine bestimmte Klasse, insbesondere Güteklasse, klassiert, kann jeweils die Eigenschaft, insbesondere Güte, der Baugruppe, beispielsweise eines Laufgitters, einer Stufe, eines Verdichters oder einer Turbine oder der gesamten Gasturbine, auf Basis des Vergleichsbauteils dieser Klasse, insbesondere Güteklasse, prognostiziert werden, wenn dieses alternativ an einer von mehreren unterschiedlichen Positionen, beispielsweise an einem Rotor, angeordnet ist bzw. wird.

Zusätzlich oder alternativ zu einer Variation der Anordnungen eines oder mehrerer Bauteile der Baugruppe kann auch die Eigenschaft, insbesondere Güte, der Baugruppe prognostiziert werden, wenn an wenigstens einer Position alternativ typgleiche Bauteile unterschiedlicher Klassen, insbesondere Güteklassen, angeordnet werden. Insbesondere hierzu werden in einer Ausführung teilweise oder vollständig automatisiert Eigenschaften, insbesondere Güten, der Baugruppe auf Basis von unterschiedlichen Klassen, insbesondere Güteklassen, eines oder mehrerer Bauteile der Baugruppe prognostiziert, wobei in einer Ausführung alternativ Vergleichsbauteile der unterschiedlichen Klassen, insbesondere Güteklassen, an derselben Position vorgesehen werden und die Eigenschaft, insbesondere Güte, der Baugruppe jeweils mit den solcherart angeordneten Vergleichsbauteilen prognostiziert wird.

Weist beispielsweise eine Baugruppe, beispielsweise ein Laufgitter, eine Stufe, ein Verdichter oder eine Turbine oder die gesamte Gasturbine, an einer Position ein bestimmtes Bauteil, beispielsweise eine Laufschaufel, auf, kann jeweils die Eigenschaft, insbesondere Güte, der Baugruppe auf Basis von Vergleichsbauteilen unterschiedlicher Klassen, insbesondere Güteklassen, prognostiziert werden, wenn diese alternativ an der Position angeordnet sind bzw. werden. Zusätzlich oder alternativ kann jeweils die Eigenschaft, insbesondere Güte, der Baugruppe auf Basis eines Vergleichsbauteils einer Klasse, insbesondere Güteklasse, in die ein Bauteil auf Basis seiner ermittelten oder variierten Geometrie und der hierfür prognostizierten Aero- und/oder Thermodynamik klassiert worden ist, prognostiziert werden, wenn dieses Vergleichsbauteil alternativ an unterschiedlichen Positionen angeordnet ist bzw. wird.

In einer Weiterbildung werden die unterschiedlichen Klassen, insbesondere Güteklassen, bzw. Vergleichsbauteilen teilweise oder vollständig automatisiert auf Basis eines Lagerbestands vorgegeben.

Weist beispielsweise ein ausgebautes Bauteil eine erste Klasse, insbesondere Güteklasse, das variierte Bauteil, d.h. nach einer entsprechenden Reparatur eine prognostizierte bessere zweite Klasse, insbesondere Güteklasse, und ein alternativ im Lagerbestand vorhandenes Ersatzbauteil eine bessere dritte Klasse, insbesondere Güteklasse, auf, so kann die Eigenschaft, insbesondere Güte, der Baugruppe jeweils mit einem Vergleichsbauteil der ersten, zweiten und dritten Klasse, insbesondere Güteklasse, prognostiziert und so einfach, effektiv und insbesondere wenigstens teilweise automatisiert entschieden werden, ob das ausgebaute Bauteil ohne Reparatur, das reparierte Bauteil oder das Ersatzbauteil aus dem Lagerbestand an der entsprechenden Position eingebaut werden soll.

Entsprechend wird in einer Ausführung vollständig oder teilweise automatisiert eine Aufbauempfehlung der Baugruppe auf Basis einer der prognostizierten Eigenschaften, insbesondere Güten, und/oder eines Bestandes, insbesondere Lagerbestandes, ausgegeben bzw. generiert.

Wie vorstehend erläutert, kann die Prognose der Eigenschaft, insbesondere Güte, der Baugruppe auf Basis von Vergleichsbauteilen, die für die jeweilige Klasse, insbesondere Güteklasse, repräsentativ sind, insbesondere auf Basis einer Mittelung unterschiedlicher Geometrien und/oder Aero- und/oder Thermodynamiken innerhalb der Klasse, insbesondere Güteklasse, ermittelt worden sind, in einer Ausführung vorteilhaft eine, insbesondere kombinatorische, Optimierung der Baugruppe gestatten, ohne diese jeweils mit konkreten Bauteilen simulieren zu müssen.

In einer Ausführung wird die Geometrie robotergestützt und/oder optisch, insbesondere mittels photogrammetrischer Streiflichtprojektion, ermittelt, insbesondere, indem das Bauteil und/oder eine Vorrichtung zur photogrammetrischen Streiflichtprojektion robotergeführt bewegt werden. In einer Ausführung erzeugt die photogrammetrische Streiflichtprojektion eine dreidimensionale Punktewolke.

In einer Ausführung umfasst bzw. beschreibt die Geometrie des Bauteils eine Schaufelblattgeometrie, insbesondere eine Vorder- und/oder Hinterkantengeometrie, Sehnenlänge, Sehnenlänge bzw. Schaufelhöhe, und/oder eine Schaufelfußgeometrie, insbesondere eine Orientierung des Schaufelfußes zum Schaufelblatt.

In einer Ausführung wird das Bauteil vollständig oder teilweise automatisiert vorgeprüft, insbesondere auf sein Gewicht und/oder (Oberflächen)beschädigungen, und seine Geometrie abhängig davon ermittelt, ob das Bauteil eine vorgegebene Vorprüfbedingung erfüllt. In einer Weiterbildung werden die hier beschriebenen Schritte der Klassierung des (variierten) Bauteils nur bzw. erst dann durchgeführt, wenn das Bauteil, gegebenenfalls nach entsprechender, beispielsweise bereits durch die (Oberflächen)beschädigungen bedingter, Reparatur, die vorgegebene Vorprüfbedingung erfüllt, beispielsweise ein entsprechendes Gewicht und/oder eine entsprechende Oberfläche aufweist. Andernfalls, d.h. falls das Bauteil die Vorprüfbedingung (noch) nicht erfüllt, kann das Bauteil in einer Ausführung, insbesondere vollständig oder teilweise automatisiert, einer Reparatur zugeführt oder verworfen bzw. aussortiert werden.

In einer Ausführung wird die Aero- und/oder Thermodynamik vollständig oder teilweise automatisiert auf Basis einer ein- oder mehrdimensionalen Abweichung der Geometrie von einer oder mehreren vorgegebenen Geometrien prognostiziert, insbesondere durch Interpolation auf Basis einer Datenbank vorgegebener Geometrien und diesen zugeordneten Aero- und/oder Thermodynamiken.

So können in einer Ausführung in einer Datenbank beispielsweise für verschiedene Sehnenlänge und Schaufelhöhen jeweils bestimmte Aero- und/oder Thermodynamiken vorgegeben bzw. abgespeichert sein. Die ermittelte Sehnenlänge und Schaufelhöhe eines Bauteils wird dann mit diesen abgespeicherten Sehnenlängen und Schaufelhöhen verglichen und seine Aero- und/oder Thermodynamik entsprechend (mehrdimensional) interpoliert, wobei vorliegend zur kompakteren Darstellung auch ein Extrapolieren verallgemeinernd als Interpolieren im Sinne der vorliegenden Erfindung verstanden wird.

Eine Aerodynamik gibt in einer Ausführung ein- oder mehrdimensional eine aerodynamische Performance des Bauteils, beispielsweise einen Strömungswiderstand, eine Druckdifferenz, einen (aerodynamischen) Wirkungsgrad, einen Umlenkwinkel, einen (aerodynamischen) Verlustbeiwert und/oder eine (aerodynamische) Kennlinie an.

Eine Thermodynamik gibt in einer Ausführung ein- oder mehrdimensional eine thermodynamische Performance des Bauteils, beispielsweise einen Wärmeaufnahme und/oder -abgabe, eine Temperaturdifferenz, einen (thermodynamischen) Wirkungsgrad und/oder eine (thermodynamische) Kennlinie an.

In einer Ausführung wird das Bauteil nicht nur auf Basis seiner prognostizierten Aero- und/oder Thermodynamik, sondern zusätzlich auch auf Basis eines oder mehrerer weiterer Attribute, insbesondere einer Alterungsbeständigkeit gegenüber einsatzspezifischem Verschleiß, klassiert.

Die Klassierung aufgrund mehrerer Kriterien kann in einer Ausführung additiv sein, wobei ein besserer Wert eines Kriteriums einen schlechteren Wert eines anderen Kriteriums kompensieren und so eine Klassierung in eine bessere Klasse, insbesondere Güteklasse, bedingen kann. Gleichermaßen kann die Klassierung aufgrund mehrerer Kriterien in einer Ausführung kumulativ sein, wobei für eine Klassierung in eine entsprechende Klasse, insbesondere Güteklasse, alle Kriterien jeweils wenigstens einen bestimmten Mindestwert aufweisen müssen.

In einer Ausführung wird dem Bauteil vollständig oder teilweise automatisiert eine Identifikation zugeordnet und diese mit ermittelten Daten des Bauteils, insbesondere seiner ermittelten Geometrie und/oder Klasse, insbesondere Güteklasse, und/oder Historie, insbesondere Reparatur- und/oder Geometriehistorie, verknüpft, insbesondere abgespeichert, insbesondere in einer Datenbank.

In einer Weiterbildung wird die Identifikation bedarfsabhängig generiert: hierzu wird in einer Ausführung zunächst, insbesondere optoelektronisch, geprüft, ob das Bauteil bereits eine entsprechende Identifikation aufweist. Ist dies nicht der Fall, wird diese an dem Bauteil hergestellt, d.h. bedarfsabhängig generiert, beispielsweise durch Herstellen einer optoelektronisch lesbaren Kodierung an einer vorgegebenen, insbesondere luftfahrtechnisch zugelassenen, Stelle des Bauteils.

Nach einem Aspekt der vorliegenden Erfindung ist ein System zum Durchführen eines hier beschriebenen Verfahrens eingerichtet und/oder weist auf:
- Mittel zum Ermitteln einer Geometrie eines strömungsführenden Bauteils der Gasturbine;
- Mittel zum Prognostizieren einer Aero- und/oder Thermodynamik des Bauteils auf Basis der ermittelten Geometrie; und
- Mittel zum Klassieren des Bauteils in eine von mehreren vorgegebenen Klassen, insbesondere Güteklassen, auf Basis der prognostizierten Aero- und/oder Thermodynamik.

In einer Ausführung weist das System auf:
- Mittel zum virtuellen Variieren der Geometrie des Bauteils;
- Mittel zum Prognostizieren der Aero- und/oder Thermodynamik des variierten Bauteils auf Basis dieser variierten Geometrie; und
- Mittel zum Klassieren des variierten Bauteils in eine der Klassen, insbesondere Güteklassen,.

In einer Ausführung weist das System Mittel zum Ausgegeben einer Reparaturempfehlung des Bauteils auf Basis der variierten Geometrie, falls die Klasse, insbesondere Güteklasse, des variierten Bauteils eine vorgegebene Bedingung erfüllt, insbesondere besser ist als die Klasse, insbesondere Güteklasse, des Bauteils mit der ermittelten Geometrie.

In einer Ausführung weist das System Mittel zum Prognostizieren einer Eigenschaft, insbesondere Güte, einer Baugruppe mit dem Bauteil auf Basis seiner Klasse, insbesondere Güteklasse, auf.

In einer Ausführung weist das System Mittel zum Prognostizieren von Eigenschaften, insbesondere Güten, der Baugruppe auf Basis von unterschiedlichen Anordnungen und/oder von, insbesondere auf Basis eines Lagerbestands vorgegebenen, unterschiedlichen Klassen, insbesondere Güteklassen, wenigstens eines Bauteils der Baugruppe auf.

In einer Ausführung weist das System Mittel zum Ausgegeben einer Aufbauempfehlung der Baugruppe auf Basis einer der prognostizierten Eigenschaften, insbesondere Güten, auf.

In einer Ausführung weist das System einen Roboter und/oder ein Mittel zur Geomtrieerfassung, insbesondere eine Vorrichtung zur photogrammetrischen Streiflichtprojektion, auf.

In einer Ausführung weist das System Mittel zum Vorprüfen des Bauteils auf.

In einer Ausführung weist das System Mittel zum Prognostizieren der Aero- und/oder Thermodynamik auf Basis einer Abweichung der Geometrie von wenigstens einer vorgegebenen Geometrie, insbesondere durch Interpolation auf Basis einer Datenbank vorgegebener Geometrien und diesen zugeordneten Aero- und/oder Thermodynamiken, auf.

In einer Ausführung weist das System Mittel zum Klassieren des Bauteils zusätzlich auf Basis wenigstens eines weiteren Attributs, insbesondere einer Alterungsbeständigkeit gegenüber einsatzspezifischem Verschleiß, auf.

In einer Ausführung weist das System Mittel zum Zuordnen einer, insbesondere bedarfsabhängig generierten, Identifikation zu dem Bauteil und zum Verknüpfen dieser Identifikation mit ermittelten Daten des Bauteils, insbesondere seiner ermittelten Geometrie und/oder Klasse, insbesondere Güteklasse, und/oder Historie, auf.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

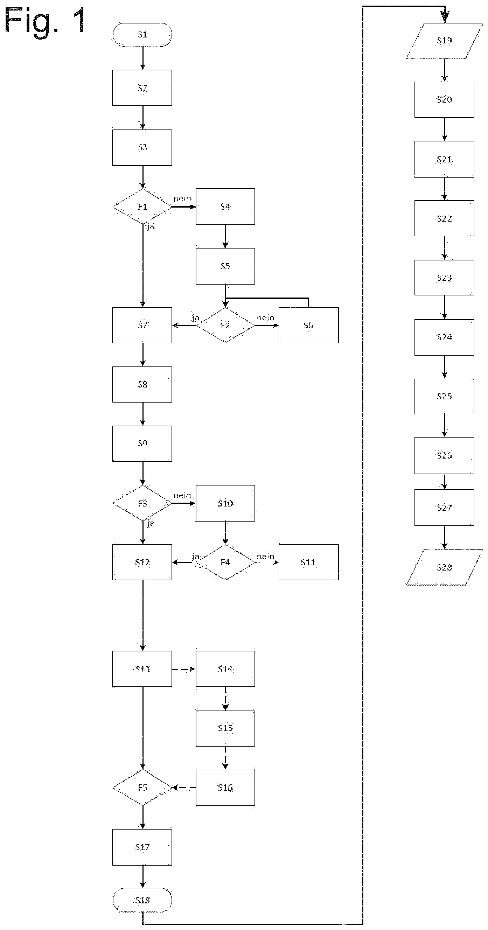

- Fig. 1: ein Verfahren nach einer Ausführung der vorliegenden Erfindung.

Fig. 1 zeigt ein Verfahren nach einer Ausführung der vorliegenden Erfindung. In einem Schritt S1 werden Bauteile in Form von Gasturbinenschaufeln in einem Kleinladungsträger angeliefert. In einem Schritt S2 wird ein RFID-Chip oder Barcode oder eine andere Identifikation des Kleinladungsträgers ausgelesen, auf dem in der Demontage in Form einer digitalen Laufkarte verschiedenen bauteilbezogenen Informationen (beispielsweise Triebwerk-Typ, Stufe, Befundart "Hauptbefund" oder "Schlussprüfen", Schaufel(blatt)typ) vermerkt wurden.

Die Bauteile im Kleinladungsträger werden in einem Schritt S3 durch einen Industrieroboter vereinzelt und auf eine vorgegebene Identifikation in Form eines Data-Matrix-Codes optisch untersucht. Ist diese Identifikation(smarkierung) vorhanden (F1: "ja"), wird das für das Schlussprüfen bestimmte Bauteil an der nächsten Station gewogen (Schritt S7). Das Ergebnis wird mittels der zuvor ausgelesenen Identifikation in eine Bauteildatenbank übertragen. Bauteile für den Hauptbefund überspringen diesen Schritt und werden in einem Schritt S8 für die visuelle Inspektion vorbereitet.

Ist der Data-Matrix Code nicht vorhanden (F1: "nein"), erfolgt durch optische Bildgebungssensoren eine Aufnahme der Part- und Serialnummer des Bauteils (Schritt S4). Im Anschluss wird eine Identifikation generiert und auf das Bauteil aufgebracht (Schritt S5). Um die Lesbarkeit des Codes in den nachgeschalteten Arbeitsschritten sicherzustellen, erfolgt in Schritt F2 eine Überprüfung des Data-Matrix-Codes hinsichtlich der Lesbarkeit. Falls die Markierung nicht maschinell lesbar ist (F2: "nein"), wird der Code in Schritt S6 nachgearbeitet, andernfalls werden für den Schlussbefund bestimmte Bauteile in Schritt S7 gewogen.

Nach dem Wiegen der für den Schlussbefund bestimmten Komponenten (Schritt S7) werden die Bauteile für beide Befundarten für die visuelle Inspektion mittels demineralisiertem Wasser gereinigt (Schritt S8) und mit Hilfe eines optischen Verfahrens hinsichtlich ihrer Oberflächenbeschädigungen geprüft (Schritt S9), d.h. es wird eine Vorprüfung durchgeführt. Sind die Beschädigungen innerhalb eines vorgegebenen Limits (F3: "ja"), folgt die Vorbereitung zur Streifenlichtprojektion durch Pulverbeschichten (Schritt S12). Andernfalls werden die Bauteile manuell nachgeprüft (Schritt S10) und entweder der weiteren Vermessung (Schritt S12) zugeführt, wenn die manuell Nachprüfung ergibt, dass die Beschädigungen doch innerhalb des vorgegebenen Limits ist (F4: "ja"), andernfalls (F4: "nein ") wird das Bauteil in Schritt S11 aussortiert

Nach einer für die Streifenlichtprojektion vorbereitenden Mattierung der Bauteile in Schritt S12 folgt in Schritt S13 die Aufnahme einer dreidimensionalen Punktewolke, d.h. ein Ermitteln einer Geometrie.

In einem Schritt S14 werden für Triebwerkskomponenten mit dem Vermerk "Hauptbefund" jeweils eine Aero- und/oder Thermodynamik auf Basis der ermittelten sowie einer in einem oder mehreren Geometrieparametern um jeweils ein oder mehrere Parameterwerte bzw. mehrdimensional variierten Geometrie prognostiziert und in einem Schritt S15 die (variierten) Bauteile in eine von 3 bis 5 vorgegebenen Klassen, insbesondere Güteklassen, klassiert.

Bei Bauteilen mit dem Befundtyp "Schlussprüfen" wird in Schritt S14 nur die Aero- und/oder Thermodynamik auf Basis der ermittelten Geometrie prognostiziert und in einem Schritt S15 das Bauteile in eine der Klassen, insbesondere Güteklassen, klassiert.

Die Messergebnisse und Klassen, insbesondere Güteklassen, werden in Schritt S16 in der Bauteil-Datenbank abgespeichert.

Auf Basis der in den Schritten S14, S15 berechneten Ergebnisse erfolgt in Schritt S17 die Vergabe eines Befundcodes und in Schritt S18 die entsprechende Weiterleitung der Bauteile.

Ergibt dabei die Klassierung variierter Bauteile in Schritt S14, S15, dass eine bestimmte Variation eines oder mehrerer Geometrieparameter einen (Güte(Klassensprung, insbesondere in eine vorgegebene Mindest-(Güte)Klasse, bewirkt, so wird in Schritt S17 für das Bauteil eine entsprechende Reparaturempfehlung ausgegeben, die diese Variation des bzw. der Geometrieparameter bedingt. Das entsprechende Bauteil wird dann in Schritt S18 zur Reparatur ausgeleitet und nach erfolgter Reparatur wieder eingeschleust, beispielsweise in Schritt S1 oder S7.

Diesen Schritten nachgelagert erfolgt die Generierung einer Aufbauempfehlung. Dazu erhält das System nach einer Ausführung der vorliegenden Erfindung, dass das hier beschriebene Verfahren durchführt, eine mehrkriterielle Zielvorgabe (Schritt S19).

Diese Zielvorgabe kann sich beispielsweise aus einem möglichst geringen spezifischen Kraftstoffverbrauch bei einer möglichst niedrigen Abgastemperatur und minimalen Instandhaltungskosten zusammensetzen. Zudem ist für die Erstellung der Aufbauempfehlung die Kenntnis über einen aktuellen Lagerbestand vorteilhaft, welcher über eine Abfrage ermittelt wird (Schritt S20). Entsprechend des Lagerbestandes wird die zu optimierende Baugruppe für eine iterative Leistungssimulation virtuell mit Komponenten besetzt (Schritt S21). Diese erste Auswahl wird für die weitere Abfrage reserviert (Schritt S22) und die Geometriedaten der Bauteile abgefragt (Schritt S23). Mit diesen Geometriedaten erfolgt eine Leistungsrechnung mit einem iterativ ansteuerbaren Berechnungsmodell (Schritt S24). Unter Zuhilfenahme eines Algorithmus der kombinatorischen Optimierung (Schritt S25) erfolgt die Auswahl eines Bauteilsatzes (Schritt S26), welcher die zuvor definierten Zielgrößen erreicht. Dieser Bauteilsatz wird auf das Projekt gebucht und im Lager entsprechend bereitgestellt (Schritt S27), bevor der Benutzer in Schritt S28 über die Rechenergebnisse informiert wird.

## Patentansprüche

1. Verfahren zur Generierung einer Aufbauempfehlung für eine Baugruppe aus mehreren Bauteilen einer gebrauchten Gasturbine mit den automatisierten Schritten:
Ermitteln (S13) einer Geometrie eines strömungsführenden Bauteils, insbesondere einer Lauf- oder Leitschaufel, der Gasturbine;
Prognostizieren (S14) einer Aero- und/oder Thermodynamik des Bauteils auf Basis der ermittelten Geometrie;
Klassieren (S15) des Bauteils in eine von mehreren vorgegebenen Klassen, wobei diese Klassen Güteklassen sind, auf Basis der prognostizierten Aero- und/oder Thermodynamik die Brauchbarkeit des Bauteils bezeichnet; und
Prognostizieren (S24) einer Eigenschaft einer Baugruppe mit dem Bauteil auf Basis seiner Klasse, wobei Eigenschaften der Baugruppe auf Basis von unterschiedlichen Anordnungen und/oder von unterschiedlichen Klassen des Bauteils der Baugruppe prognostiziert werden (S24) und wobei eine Aufbauempfehlung der Baugruppe auf Basis einer der prognostizierten Eigenschaften ausgegeben wird (S26), so, dass das eine erste Klasse aufweisende Bauteil nach einer Reparatur eine prognostizierte zweite Klasse aufweist, wenigstens eine Eigenschaft der Baugruppe mit einem Vergleichsbauteil einer anderen Klasse prognostiziert und hieraus bestimmt wird, ob das Bauteil ohne Reparatur, das reparierte Bauteil oder ein Ersatzbauteil an der entsprechenden Position eingebaut werden soll.

2. Verfahren nach dem vorhergehenden Anspruch, mit den wenigstens teilweise automatisierten Schritten:
virtuelles Variieren (S14) der Geometrie des Bauteils;
Prognostizieren (S14) der Aero- und/oder Thermodynamik des variierten Bauteils auf Basis dieser variierten Geometrie; und
Klassieren (S15) des variierten Bauteils in eine der Klassen.

3. Verfahren nach dem vorhergehenden Anspruch, wobei wenigstens teilweise automatisiert eine Reparaturempfehlung des Bauteils auf Basis der variierten Geometrie ausgegeben wird (S17), falls die Klasse des variierten Bauteils eine vorgegebene Bedingung erfüllt, insbesondere besser ist als die Klasse des Bauteils mit der ermittelten Geometrie.

4. Verfahren nach einem der vorhergehenden Ansprüche, wobei die Geometrie robotergestützt und/oder mit einem Mittel zur, insbesondere optischen, Geometrieerfassung, insbesondere mittels photogrammetrischer Streiflichtprojektion, ermittelt wird (S13) und/oder eine Schaufelblatt- und/oder Schaufelfußgeometrie umfasst.

5. Verfahren nach einem der vorhergehenden Ansprüche, wobei das Bauteil wenigstens teilweise automatisiert vorgeprüft (S9) und seine Geometrie abhängig davon ermittelt wird, ob das Bauteil eine vorgegebene Vorprüfbedingung (F3) erfüllt.

6. Verfahren nach einem der vorhergehenden Ansprüche, wobei die Aero- und/oder Thermodynamik wenigstens teilweise automatisiert auf Basis einer Abweichung der Geometrie von wenigstens einer vorgegebenen Geometrie prognostiziert wird, insbesondere durch Interpolation auf Basis einer Datenbank vorgegebener Geometrien und diesen zugeordneten Aero- und/oder Thermodynamiken.

7. Verfahren nach einem der vorhergehenden Ansprüche, wobei das Bauteil zusätzlich auf Basis wenigstens eines weiteren Attributs, insbesondere einer Alterungsbeständigkeit gegenüber einsatzspezifischem Verschleiß, klassiert wird.

8. Verfahren nach einem der vorhergehenden Ansprüche, wobei dem Bauteil wenigstens teilweise automatisiert eine, insbesondere bedarfsabhängig generierte, Identifikation zugeordnet (S3, S5) und diese mit ermittelten Daten des Bauteils, insbesondere seiner ermittelten Geometrie und/oder Klasse und/oder Historie, verknüpft wird.

9. System zum Durchführen eines Verfahrens nach einem der vorhergehenden Ansprüche, das aufweist:
Mittel zum Ermitteln einer Geometrie eines strömungsführenden Bauteils der Gasturbine;
Mittel zum Prognostizieren einer Aero- und/oder Thermodynamik des Bauteils auf Basis der ermittelten Geometrie; und
Mittel zum Klassieren des Bauteils in eine von mehreren vorgegebenen Klassen, insbesondere Güteklassen, auf Basis der prognostizierten Aero- und/oder Thermodynamik.

10. Computerprogrammprodukt mit einem Programmcode, der auf einem von einem Computer lesbaren Medium gespeichert ist, zur Durchführung eines Verfahrens nach einem der vorhergehenden Ansprüche.

## Claims

1. Method for generating a construction recommendation for an assembly of a plurality of components of a used gas turbine, comprising the automated steps of:
determining (S13) a geometry of a flow-guiding component, in particular a rotor blade or stator blade, of the gas turbine;
predicting (S14) aerodynamics and/or thermodynamics of the component on the basis of the determined geometry;
classifying (S15) the component into one of a plurality of specified classes, wherein these classes are quality classes, designates the usefulness of the component on the basis of the predicted aerodynamics and/or thermodynamics; and
predicting (S24) a property of an assembly with the component on the basis of its class, wherein properties of the assembly are predicted on the basis of different arrangements and/or different classes of the component of the assembly (S24) and wherein a construction recommendation for the assembly is output (S26) on the basis of one of the predicted properties, such that the component having a first class has a predicted second class after a repair, at least one property of the assembly is predicted with a comparison component of another class and it is determined from this whether the component without repair, the repaired component or a replacement component is to be installed at the corresponding position.

2. Method according to the preceding claim, comprising the at least partially automated steps of:
virtual variation (S14) of the geometry of the component;
predicting (S14) the aerodynamics and/or thermodynamics of the varied component on the basis of this varied geometry; and
classifying (S15) the varied component into one of the classes.

3. Method according to the preceding claim, wherein a repair recommendation for the component is output (S17) on the basis of the varied geometry in an at least partially automated manner if the class of the varied component meets a specified condition, in particular is better than the class of the component having the determined geometry.

4. Method according to any of the preceding claims, wherein the geometry is determined (S13) by means of a robot and/or using a means for, in particular optical, geometry detection, in particular by means of photogrammetric grazing light projection, and/or comprises a blade geometry and/or blade root geometry.

5. Method according to any of the preceding claims, wherein the component is pre-tested (S9) in an at least partially automated manner and its geometry is determined depending on whether the component meets a specified pre-test condition (F3).

6. Method according to any of the preceding claims, wherein the aerodynamics and/or thermodynamics are predicted in an at least partially automated manner on the basis of a deviation of the geometry from at least one specified geometry, in particular by interpolation based on a database of specified geometries and aerodynamics and/or thermodynamics assigned thereto.

7. Method according to any of the preceding claims, wherein the component is additionally classified on the basis of at least one further attribute, in particular an aging resistance to use-specific wear.

8. Method according to any of the preceding claims, wherein the component is assigned (S3, S5) an identification in an at least partially automated manner, the identification in particular being generated as required, and said identification is linked to determined data of the component, in particular its determined geometry and/or class and/or history.

9. System for performing a method according to any of the preceding claims, comprising:
means for determining a geometry of a flow-guiding component of the gas turbine;
means for predicting aerodynamics and/or thermodynamics of the component on the basis of the determined geometry; and
means for classifying the component into one of a plurality of specified classes, in particular quality classes, on the basis of the predicted aerodynamics and/or thermodynamics.

10. Computer program product having a program code, which is stored on a computer-readable medium, for carrying out a method according to any of the preceding claims.

## Revendications

1. Procédé de génération d'une recommandation d'assemblage pour un ensemble de plusieurs composants d'une turbine à gaz usagée, comportant les étapes automatisées suivantes :
la détermination (S13) d'une géométrie d'un composant guidant l'écoulement, en particulier d'une aube mobile ou d'une aube directrice, de la turbine à gaz ;
la prédiction (S14) d'une aérodynamique et/ou d'une thermodynamique du composant sur la base de la géométrie déterminée ;
le classement (S15) du composant dans une classe parmi plusieurs classes prédéfinies, dans lequel lesdites classes sont des classes de qualité, sur la base de l'aérodynamique et/ou de la thermodynamique prédites, lesquelles désignent l'utilité du composant ; et
la prédiction (S24) d'une propriété d'un ensemble comportant le composant sur la base de sa classe, dans lequel des propriétés de l'ensemble étant prédites (S24) sur la base de différents agencements et/ou de différentes classes du composant de l'ensemble et dans lequel une recommandation d'assemblage de l'ensemble sur la base de l'une des propriétés prédites est émise (S26), de telle sorte que le composant présentant une première classe présente une seconde classe prédite après une réparation, l'au moins une propriété de l'ensemble étant prédite à l'aide d'un composant de comparaison d'une autre classe et l'on détermine ainsi si le composant sans réparation, le composant réparé ou un composant de remplacement doit être installé à l'emplacement correspondant.

2. Procédé selon la revendication précédente, comportant les étapes au moins partiellement automatisées suivantes :
la variation (S14) virtuelle de la géométrie du composant ;
la prédiction (S14) de l'aérodynamique et/ou de la thermodynamique du composant varié à partir de ladite géométrie variée ; et
le classement (S15) du composant varié dans l'une des classes.

3. Procédé selon la revendication précédente, dans lequel une recommandation de réparation de le composant est émise (S17), au moins partiellement de manière automatisée, sur la base de la géométrie variée si la classe du composant varié satisfait à une condition prédéfinie, en particulier si elle est supérieure à la classe du composant présentant la géométrie déterminée.

4. Procédé selon l'une quelconque des revendications précédentes, dans lequel la géométrie est déterminée (S13) de manière robotisée et/ou à l'aide d'un moyen, en particulier optique, de détection de géométrie, en particulier au moyen d'une projection photogrammétrique de lumière rasante, et/ou présente une géométrie de pale d'aube et/ou de pied d'aube.

5. Procédé selon l'une quelconque des revendications précédentes, dans lequel le composant est préalablement mis à l'essai (S9), au moins partiellement de manière automatisée, et sa géométrie est déterminée en fonction du fait de savoir si le composant satisfait à une condition de mise préalable à l'essai (F3) prédéfinie.

6. Procédé selon l'une quelconque des revendications précédentes, dans lequel l'aérodynamique et/ou la thermodynamique sont prédites, au moins partiellement de manière automatisée, sur la base d'un écart de la géométrie par rapport à au moins une géométrie prédéfinie, en particulier par interpolation sur la base d'une base de données de géométries prédéfinies et d'aérodynamiques et/ou de thermodynamiques associées à celles-ci.

7. Procédé selon l'une quelconque des revendications précédentes, dans lequel le composant est en outre classé sur la base d'au moins une autre caractéristique, en particulier d'une résistance au vieillissement par rapport à l'usure spécifique à l'utilisation.

8. Procédé selon l'une quelconque des revendications précédentes, dans lequel une identification, en particulier générée en fonction des besoins, est attribuée (S3, S5), au moins partiellement de manière automatisée, au composant, et ladite identification est liée à des données déterminées du composant, en particulier à sa géométrie et/ou à sa classe et/ou à son histoire déterminées.

9. Système de mise en œuvre d'un procédé selon l'une quelconque des revendications précédentes, lequel comporte :
des moyens de détermination d'une géométrie d'un composant guidant d'écoulement de la turbine à gaz ;
des moyens de prédiction d'une aérodynamique et/ou d'une thermodynamique du composant sur la base de la géométrie déterminée ; et
des moyens de classement du composant dans une classe parmi plusieurs classes prédéfinies, en particulier des classes de qualité, sur la base de l'aérodynamique et/ou de la thermodynamique prédites.

10. Produit de programme informatique comportant un code de programme sauvegardé sur un support lisible par ordinateur, destiné à la mise en œuvre d'un procédé selon l'une quelconque des revendications précédentes.
